(19) Europäisches Patentamt
European Patent Office
Office européen des brevets

(11) **EP 1 923 679 A1**

(12) **EUROPEAN PATENT APPLICATION**

(43) Date of publication:
**21.05.2008 Bulletin 2008/21**

(51) Int Cl.:
***G01K 11/00*** *(2006.01)*

(21) Application number: **06124247.5**

(22) Date of filing: **16.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Pixartis SA**
**1005 Lausanne (CH)**

(72) Inventors:
• **Boisbouvier, Nicolas**
**74500 Evian-Les-Bains (FR)**
• **Butz, Torsten**
**9052 Niederteufen (CH)**
• **Seetharamdoo, Divitha**
**1004 Lausanne (CH)**
• **Vellas, Nicolas**
**59250 Halluin (FR)**
• **Werquin, Matthieu**
**59320 Sequedin (FR)**

(74) Representative: **Ganguillet, Cyril et al**
**ABREMA**
**Agence Brevets & Marques**
**Ganguillet & Humphrey**
**Avenue du Théâtre 16**
**Case postale 5027**
**1002 Lausanne (CH)**

(54) **Autocalibrating Multichannel Radiometer**

(57) The auto-calibrating Multi-channel Radiometer comprises several antennas (**2**) sensing the thermal radiation from an object (**1**). Before the sensed power is getting fed into the n different amplification channels (**4.1-4.n**), the power might have to be split by a power splitter (**3**). After the amplification channels, the signal gets recombined by a correlator (**5**) before getting detected by a square law detector (**6**) and an integrator (**7**). An analogue-to-digital converter (**8**) makes the measure-ment readable by any personal computer. Additional components are two noise sources (**10, 11**) connected through cables (**13, 14**) to a four port dual-directional cou-pler (**15**). A high precision temperature sensor (**16**) connected through a cable (**12**) to a second channel of the analogue-to-digital converter (**8**) allows to monitor continuously the physical temperature of the radiometer. The measurement cycle is driven by the personal computer through the digital connections (**17, 18**).

**Fig. 2**

EP 1 923 679 A1

**Description**

**Technical Field of the Invention**

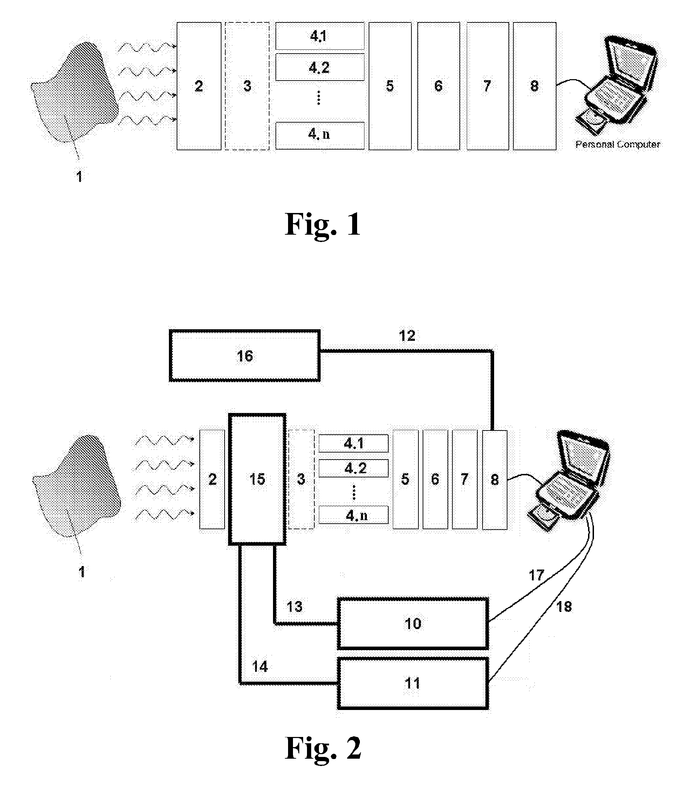

The present invention relates to a radiometric system which measures high frequency noise at high precision. It implements a multichannel architecture based on parallel independent amplification channels and on a correlation circuitry (Fig.1 and Fig.2). It also includes an auto-calibration framework which determines the calibrated temperature from a body under investigation from the associated noise power measurements.

**Background of Microwave Radiometry**

According to Planck's law, any object above absolute zero naturally radiates electromagnetic radiation. In the microwave region of the resulting thermal spectrum (Rayleigh-Jeans approximation), the dissipated spectral power $P_f$ at a given frequency $f$ is proportional to the homogeneous temperature $T$ of the object. The constant of proportionality is called Boltzmann constant and is denoted $k$:

$$P_f = \frac{2 \cdot k \cdot T \cdot f^2}{c^2}. \qquad \text{Eq. 1.}$$

Over a narrow bandwidth $B$, the total noise power $P_N$, called thermal noise power, can be approximated by the following equation:

$$P_N = k \cdot T \cdot B. \qquad \text{Eq. 2.}$$

Eq. 1 and eq. 2 represent the dissipated noise power of an object. In order to quantify this dissipated power, a radiometric antenna has to be employed which receives an effective noise power $P_{scene}$ given by

$$P_{scene} = (1 - \rho^2) \cdot k \cdot T \cdot B. \qquad \text{Eq. 3.}$$

$\rho$ is called the return loss of the receiving antenna.
Eqs. 1-3 are only valid for an object having a constant and homogenous temperature $T$. In the case of a non-homogenous temperature distribution within the object, the constant temperature $T$ of eqs. 1-3 has to be replaced by a frequency dependent temperature equivalent term $T^f_B$, called brightness temperature. It is defined by

$$T_B^f = \sum_i W_i(f) \cdot T_i. \qquad \text{Eq. 4.}$$

$W_i$ is called the Weighting Function (WF) at the finite volume $\Delta V_i$ at temperature $T_i$ of the object under observation. The WFs are frequency dependent and, at constant frequency $f$, are given by

$$W_i(f) = \frac{\sigma_i(f) \cdot |E_i(f)|^2}{\sum_{i=0}^{\infty} \sigma_i(f) \cdot |E_i(f)|^2}, \qquad \text{Eq. 5.}$$

where $\sigma_i$ is the conductivity of the finite volume $\Delta V_i$ and $E_i$ the electric field produced in $\Delta V_i$. Using eqs. 4 and 5, eq. 3 can be rewritten as follows:

$$P_{scene} = (1 - \rho^2) \cdot k \cdot B \cdot \sum_i W_i(B) \cdot T_i, \quad \text{Eq. 6.}$$

where $W_i(B)$ is the WF of eq. 5 averaged over the frequency band $B$. In analogy and for completeness, one can define the brightness temperature, $T_B$, as the average of the frequency dependent brightness temperatures over the measurement frequency band:

$$T_B = \sum_i W_i(B) \cdot T_i. \qquad \text{Eq. 7.}$$

The method of measuring the noise power of an object and relating it to its physical temperature through eqs. 3 and 6 is called microwave radiometry. The approach has been intensively explored [1]. There are several advantages of such a temperature determination method. In particular it is harmless, because non-invasive (the antenna which collects the thermal noise power is simply in contact with or at some distance from the body under investigation) and based on a completely passive system (the receiver collects the naturally emitted noise power from the object without emitting any radiation). In order to perform near-field microwave radiometry, one needs one (or several) passive microwave antenna(s), characterized by its efficiency coefficient $\rho$, as well as a radiometer, which amplifies and finally quantifies the microwave radiation received by the antenna(s).

Several architectures of microwave radiometers, especially single-antenna radiometers, have been studied. Their performances are dependent on their specific architectures and on the employed electronic components. But finally, their common performance characteristics are their sensitivity and measurement accuracy. The sensitivity quantifies the smallest detectable brightness temperature variation $\Delta T_B$ of the object under investigation. The measurement accuracy describes the amount of uncertainty that exists in a measurement with respect to the relevant absolute temperature. The sensitivity, respectively the accuracy, mainly depends on the choice of the radiometric architecture, respectively, on the calibration process.

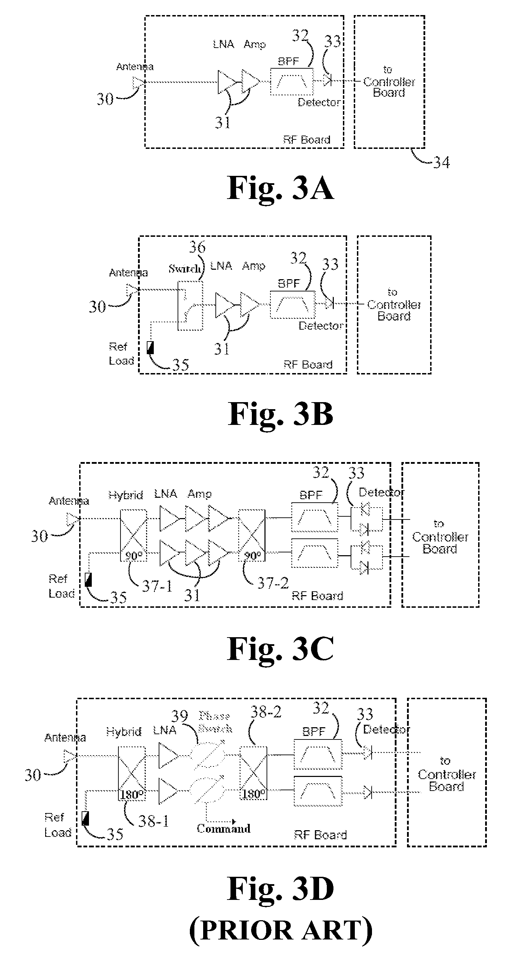

The total power radiometer is probably the simplest radiometric architecture. It simply amplifies the raw signal received at the antenna. A possible implementation of such a radiometer architecture is shown fig. 3A: The radiometer chain is basically made of an antenna 30 connected to one or several power amplifier(s) 31, a band-pass filter 32 (eventually used to set the bandwidth of the receiver), a square law detector 33 and a controller board 34 which integrates the signal over a chosen observation time interval.

Several other architectures for microwave radiometry have been proposed in the past. A widespread architecture is for example the Dicke microwave radiometer [2]. A sketch of the Dicke radiometer is shown in fig. 3B. The Dicke principle is to switch the integration process alternatively between the signal from the antenna 30 and the signal from a reference pre-determined load 35 at temperature $T_{ref}$ thanks to a RF switch 36. Such an integration cycle allows decreasing the influence of the receiver gain fluctuations of the radiometer circuitry on the measured brightness temperatures. From the fact that the Dicke switch alternates between the reference charge and the antenna, one can demonstrate that its sensitivity is deteriorated by a factor 2 in comparison to the total power radiometer.

Less common architectures have also been proposed in order to increase the radiometric sensitivity of the system. The first such architecture is sketched in fig. 3C [3]. It makes use of a 90° hybrid coupler 37-1 in order to distribute the noise signals from the antenna 30 and from the reference load 35 to a balanced amplifier chain [4]. Those two inputs are halved out of phase to both amplifiers and then reconstructed at the output thanks to a second 90° hybrid coupler 37-2. This design provides the same benefits of receiver gain fluctuation reduction as the Dicke architecture without the added loss, increased consumption and complexity of the active switching circuitry. Moreover, the antenna temperature is continuously observed which allows approaching the sensitivity of a total power radiometer.

The second alternative architecture is called a Planck radiometer [5]. It makes use of the same principle as the balanced amplification thanks to the 180° hybrid coupler **38-1**, but also re-introduces a switching cycle (fig. 3D). This switching process concerns the phase of one channel of the balanced architecture. A 180° phase switch **39** is introduced in each channel between amplifier(s) **31** and the output hybrid coupler **38-2**, but only one can be controlled while the other one is added for symmetry reasons. While the phase switch is active, the output voltage will change between the antenna and reference load at the two outputs.

The subject of the current invention is a new radiometer architecture, which has a significantly increased radiometric sensitivity in comparison to existing architectures. It also implements a new autocalibration methodology, particularly well adapted to the presented radiometer, and which reliably relates the measured noise power to the physical temperature of the object under study.

## Summary of the Invention

Our present invention makes use of power divider(s) or an array of antennas to distribute the correlated noise signal from a single observation object into multiple (two or more) independent amplification channels. These parallel channels are constituted of one or several very Low Noise Amplifiers (LNAs). At the final stage, the noise signals form the independent channels are recombined by, e.g., a 180° hybrid coupler. The fact of having two (or more) independent amplification channels enables to remove the noise power created by the electronic circuitry of the radiometer from the measured noise power, leaving just the desired noise power from the investigated object for quantification. This is due to the fact that the noise received by the antenna(s) remains correlated within the two (or more) amplification channels, while the noise which is created inside these independent channels is un-correlated. Therefore, the correlation performed by the 180° hybrid coupler removes the undesired noise from the amplification chains, and solely the noise power sensed by the receiving antenna(s) remains to be quantified

## Brief Description of the Drawings

Fig. 1 presents the key components for implementing a multi-channel radiometer.

Fig 2 is a conceptual sketch of the components to be used for the autocalibration functionality of the radiometer.

Fig. 3 present priort art including:

- Fig. 3A, which is a sketch of a basic total power radiometer.
- Fig. 3B, which is a sketch of a conventional Dicke radiometer.
- Fig. 3C, which presents a balanced radiometer architecture.
- Fig. 3D, which shows the differential radiometer from the Planck European Project.

Fig. 4A shows the chronogram of a typical measurement cycle in accordance with radiometer architecture presented in this invention (three successive phases).

Fig. 4B shows an alternative chronogram of a measurement cycle. The concrete implementation of this 3 phase cycle might be adjusted through software or optimized in hardware for a specific system.

Fig. 5 gives more details of the multichannel radiometer architecture, as disclosed in the present invention.

Figs. 6 present the preferred embodiment of the present invention, including:

- Fig. 6A, the concept of the preferred embodiment of the antenna, i.e., a waveguide antenna.
- Fig. 6B, the preferred embodiment of this radiometer architecture.

Fig. 7 presents an alternative embodiment of the present invention, which is a multi-frequency, single antenna multichannel radiometer implementation of the present invention (Six frequency bandwidth are represented).

Fig. 8 presents an alternative embodiment of the present invention, which is a two-probe extension of the multi-frequency, single antenna implementation of the present invention, including:

- Fig. 8A, the concept of alternative embodiment of the antenna , i.e., a two-probe wave guide antenna.
- Fig. 8B, the preferred embodiment of this radiometer architecture.

Fig. 9 presents an alternative embodiment of the present invention, which is an monofrequency multichannel radiometer including a Local Oscilator.

**Detailed Description of the invention**

Microwave radiometry aims to determine the physical temperature of an object by quantifying the noise power emitted by this object. As described in the section "Background of Microwave Radiometry", the emitted noise power is passively sensed by an antenna and quantified by an electronic RF circuit, called radiometer. The two main limiting factors of current radiometer implementations are the followoing:

- First, as every physical object above 0° Kelvin emits thermal radiation, this is also true for the electronic components being used for the radiometer. This means, that the measurement precision is limited by the system temperature of the radiometer.
- And second, the measured noise power is indeed proportional to the physical temperature of the object under invstigation, but the factor of proportionality is in general not easily determined, as it changes continuously due to small random changes in the state of the measurement system. Therefore a quantitive determination of the physical temperature is difficult.

The subject of this invention is to improve these two drawbacks considerably by

- using two or more independent amplification channels for the radiometric system, in order to filter out the noise power being generated by the radiometer itself.
- proposing a particulary well-adapted autocalibration method, which determines in realtime the two main changing characteristics of the measurement system: the antenna's return loss and the system gain.

These two points of the present invention will be detailed in the following sections.

**Multichannel radiometer**

One key feature of the multichannel radiometer is the use of two or more independent measurement and amplification channels. They imply that the thermal noise being created within the components of each of these channels is statistically independent from one another and that it can therefore be removed by correlation after the amplification phase.

In fig. 1, the common key components of the multichannel radiometer are conceptually shown. First, one (or several) antenna(s) **2** sense(s) the thermal radiation from the object under investigation **1**. Before the sensed power is getting fed into the n different amplification channels **4.1-4.n**, the power might have to be split by a power splitter **3**. This is the case when less antennas than amplification channels are being used. After the amplification channels, the signal gets recombined by a correlator **5** before getting detected by a square law detector 6 and an integrator 7. Finally, an analogue-to-digital converter **8**, makes the measurement readable by any state-of-the-art personal computer (PC).

**Autocalibration cycle**

A second key feature of the present invention is the use of a calibration process which is necessary to determine the absolute temperature of the media.

In order to add the autocalibration feature to the multichannel radiometer, the architecture from fig. 1 has to be complemented by additional components. The final system is conceptually shown in fig. 2. The additional components are two reference loads such as noise sources **10, 11** which are connected through cables **13, 14** to a four port dual-directional coupler 15. Turning continuously the reference loads **10, 11** on and off, allows to make some reference measurements in addition to the actual physical measurement of the object under investigation **1**. It is important though that, after amplification, the ENR (Excess Noise Ratio) of the noise sources **10, 11** remains within the quadratic range of the square law detector **6**. Furthermore, a high precision temperature sensor **16** connected through a cable 12 to a second channel of the analogue-to-digital converter **8** allows to monitor continuously the physical temperature of the radiometer. The measurement cycle, which will be explained in more detail hereafter, is driven by the PC which can turn the reference loads **10, 11** on and off through the digital connections **17, 18.**

The integration time, which is the sum of the scene measurement interval and the calibration cycle interval is given by three consecutive measurements:

- One measurement is performed when both reference loads are in their off-state, so the measured noise power ($\Delta P_{scene}$, which equals the difference between the two outputs of the correlator) comes just from the object under investigation.
- For a second measurement, one of the reference loads is turned on, while the other stays off. The resulting measured

power is denoted $\Delta P_{noise1}$ and allows to determine continuously the varying gain $G_P$ of the radiometric amplification chain.

- For the third measurement, the other reference load is in the on-state, while the first one is turned off. The measurement will be named $\Delta P_{noise2}$ and allows to determine the varying return loss $\rho$ of the antenna.

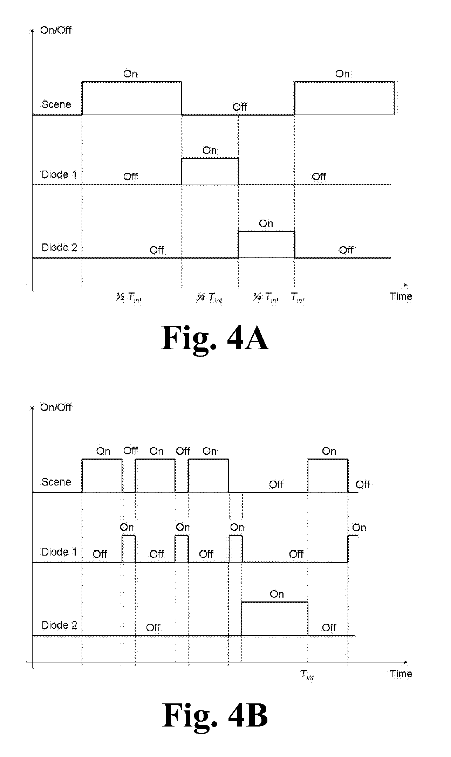

A possible chronogram of this measurement cycle is plotted in fig. 4A. The time dedicated to each measurement can be freely chosen, but maximizing the time of the scene measurement will allow us to increase the sensitivity of the system.

In addition, the temperature of the measurement device and particularly the temperature of some of its constituting RF components are getting continuously measured with the temperature sensor **16**. The aim of this sensor is to relate the measured temperature of those components to the noise powers generated by these components in order to substract them from the measurements.

Using a pre-measurement characterization step to determine some additional parameters of the radiometric circuitry, the calibrated brightness temperature $T_B$ can be determined. The parameters to be pre-determined are the coupling coefficient C of the dual-directional coupler, the emitted noise power of the first reference load **10**, $P_{noise1}$, the emitted noise power of the second reference load **11**, $P_{noise2}$, and, if necessary, the gain $G_{split}$ of the splitter **3**.

Finally, the brightness temperature $T_B$ is deduced from the power budget analysis of the implemented radiometer architecture.

One example implementation of the disclosed invention is presented in the following preferred embodiment. There, the system is made of one antenna and two amplification channels.

**Detailed Description of the Preferred Embodiments**

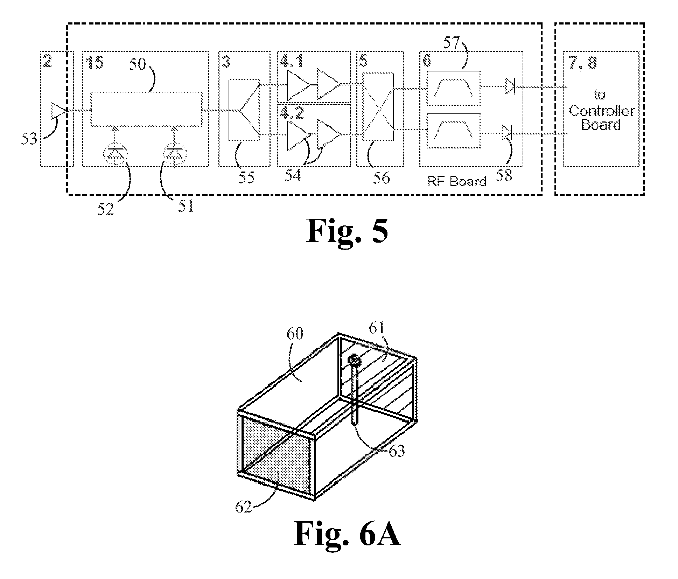

Fig. 5 describes a possible mono-frequency implementation of the radiometric architecture as being object of the present invention. Two independent amplification channels **4.1** and **4.2** are proposed in fig. 5 with both connected, at one side, to the auto-calibration circuitry and the antenna and, at the other side, to the correlation system.

The autocalibration process is made of a dual-directional coupler **50** and two noise diodes **51** and 52. The antenna **53** and the two amplification chains (made of two low noise amplifiers **54**) are connected through a power divider **55**. The correlation process is made of a 180° hybrid coupler **56** before being filtered through a band-pass filter **57** and detected thanks to RF crystal detectors **58**.

A waveguide antenna is used as the receiving antenna **53**. Such an antenna is presented in fig. 6A. It is made of four conductive walls **60** and ended by a fifth conductive wall **61** which is the bottom of the waveguide. This waveguide is filled by a dielectric **62** of permittivity $\varepsilon$ and fed by a coaxial probe **63**.

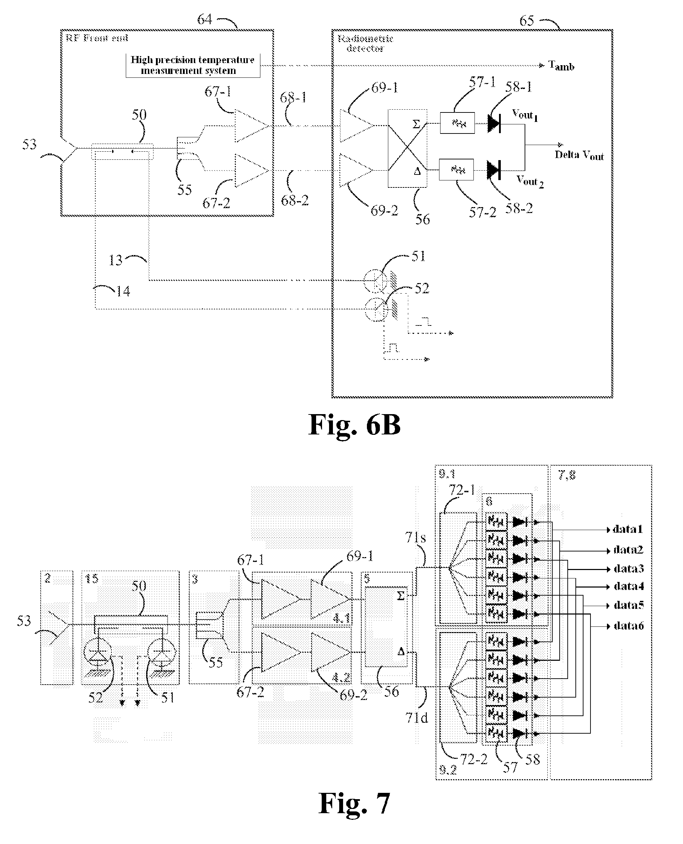

Fig 6B plots the preferred embodiment for a mono frequency architecture which is made of two separate boxes **64** and **65** linked with cables. The first box **64** is called the "antenna box" or radiofrequency (RF) front end. This box acts as the collector of natural RF or microwave noise power from the object under investigation. It contains the waveguide antenna **53**, a power divider **55** which halves the signal from the antenna, and two independent channels **4.1** and **4.2** made of low-noise and low-consumption amplifiers called LNAs **67-1** and **67-2**. Those LNAs amplify the level of received noise which gets forwarded through two Subminiature Type A (SMA) cables **68-1** and **68-2** from the antenna box to the second box **65**, called the radiometric detector box. The mentioned first amplification minimizes the impact of undesired noise from connectors, cables and exterior noise sources on the measurements.

The "antenna box" also comprises part of the circuitry for the auto-calibration process. This includes a dual-directional coupler **50** connected on one side to the antenna and on the other side to the power divider **55**. The other two ports of this coupler are connected to the radiometric detector box via two additional cables **13** and **14**. Finally, the "antenna box" also comprises the sensor of a high-precision temperature measurement system **16**. This system is connected to the radiometric detector box via a RS232 cable **12**.

The antenna box is therefore connected through four SMA cables and the mentioned RS232 cable to the radiometric detector box. The first two SMA cables **68-1** and **68-2** come from the two LNAs. The other two SMA cables **13** and **14** connect two noise diodes **51** and **52**, located in the radiometric detector box, with the dual-directional coupler **50** of the antenna box.

The two channels from the LNAs are connected in the radiometric detector box to two additional and high gain LNAs **69-1** and **69-2**, one for each channel. Then, a 180° hybrid coupler **56** is used to determine the sum and difference of the two amplified channels. If necessary, the amplified noise signal is then filtered to the desired frequency band (band-pass filters **57-1** and **57-2**) before getting detected by square law detectors **58-1** and **58-2**. Finally, the signal is integrated during a predetermined time interval.

In Figure 6B, all five connecting cables are plotted with dotted lines, because their proper lengths are not necessarily equal and depend on the specific system implementation.

The noise diodes in the radiometric detector box can be turned on and off individually. The exact cycle of their on- and off-states determines the measurement and auto-calibration cycle of the radiometric measurement. In the following, this auto-calibration cycle is presented in detail:

**Description of a measurement cycle**

As mentioned before, a measurement consists of integrating data received during a predetermined interval of time, $T_{int}$. In our case, this predetermined interval is made up of three successive measurement phases:

**Phase 1:** During the first phase of the integration interval (e.g. one half of $T_{int}$), both noise diodes **51** and **52** are in their off-state. The radiometric chain amplifies only the antenna signal. The difference between the output powers of detectors (correlation product) can be written as:

$$\Delta P_{scene} = 2 \cdot k \cdot B \cdot T_B \cdot G_T + 2 \cdot P_{coup} - P_{split}, \qquad \text{Eq. 8.}$$

Where the following definitions were used:

$k$:      Boltzmann constant,
$B$:      frequency Bandwidth,
$G_T$:      transducer gain of the radiometric chain given by

$$G_T = G_P \cdot \left(1 - \rho^2\right), \qquad \text{Eq. 9.}$$

$G_P$:      gain of the radiometric chain,
$\rho$:      the return loss of the antenna,
$P_{coup}$:      the noise output power of the dual-directional coupler when noise diodes are non-polarized given by

$$P_{coup} = 2 \cdot k \cdot T_{coup} \cdot G_P \cdot \left(1 + \rho^2\right) \cdot B, \qquad \text{Eq. 10.}$$

$T_{coup}$:      the temperature of the dual-directional coupler (**50**) in the "antenna box",
$P_{Nspit}$:      the noise output power of the power divider given by

$$P_{split} = 2 \cdot k \cdot T_{split} \cdot \frac{G_P}{G_{split}} \cdot B, \qquad \text{Eq. 11.}$$

$T_{split}$:      the temperature of the power splitter in the "antenna box",
$G_{split}$:      the gain of the power divider.

The temperatures of the coupler and the power splitter in the "antenna box" are determined in real-time thanks to the high precision temperature sensor **16**. The antenna efficiency, $\rho$, and the gain of the radiometric chain, $G_p$, are determined during phases 2 and 3 presented below. The noise output power of the power divider **55**, $G_{split}$, gets determined during a pre-measurement characterization.

**Phase 2**: During the second phase of the integration interval (e.g. one quarter of $T_{int}$), noise diode **51** is in its on-state and noise diode **52** remains in the off-state. The noise from noise diode **51** is injected in the direction of the antenna and gets partially reflected by the antenna. Thereafter, it gets amplified through the radiometric amplification chain. The difference between the output powers of the detectors can be written as:

$$\Delta P_{diode1} = 2 \cdot P_{diode1} \cdot C \cdot G_p \cdot \rho^2. \qquad\qquad \text{Eq. 12.}$$

With:

$P_{diode1}$:  the power from noise diode1,

$C$:  the coupling factor of the dual-directional coupler (e.g. 0.1 or 10dB).

The coupling coefficient $C$ of the dual-directional coupler and the emitted noise power $P_{diode1}$ of diode **51** get determined during a pre-measurement characterization.

Using the gain of the radiometric chain $G_p$ as determined in phase 3 hereafter, the measurement described by eq. 12 allows the determination of the antenna's return loss $\rho$.

**Phase 3**: During the third and last phase of the integration interval (e.g. one quarter of $T_{int}$), noise diode **52** is in its on-state and noise diode **51** is in its off-state. The noise from noise diode **52** is injected in the direction of the amplification chain, so that the difference between the output powers from the detectors can be written:

$$\Delta P_{diode2} = 2 \cdot P_{diode2} \cdot C \cdot G_p. \qquad\qquad \text{Eq. 13.}$$

With:

$P_{diode2}$:  the power from the noise diode2.

The noise power emitted by diode **52**, $P_{diode2}$, gets determined experimentally before the measurement. In order to obtain eqs. 12 and 13, some approximations had to be carried out. Namely, the noise power emitted by the 4 port couplers, the noise power from the power divider and the noise power received from the scene have been neglected. In order to justify these approximations, the noise powers generated by the noise diodes have to be selected sufficiently high without saturating the receiver.

The measurement characterized by eq. 13 allows the determination of the radiometric gain $G_p$.

**Description of the pre-calibration phase**

In order to perform a calibrated measurement, the noise powers originating from the coupler, $P_{coup}$ (see eq. 10), resp. from the splitter, $P_{split}$ (see eq. 11), have to be subtracted from the measured power difference $\Delta P_{scene}$ (as mentionned in eq. 8).

In eqs. 10, 11 and 12 all parameters are known or can be determined through the calibration steps previously described, except for the absolute temperatures of the dual-directional coupler (**50**), $T_{coup}$ (and therefore $P_{coup}$), and the absolute temperature of the power splitter (**55**), $T_{split}$ (and therefore $P_{split}$). The associated noise powers can be modeled by the following equations:

$$P_{coup} = a \cdot T_{coup},$$

$$P_{split} = b \cdot T_{split}, \qquad\qquad \text{Eqs. 14}$$

with

$$a = 2 \cdot k \cdot G_P \cdot \left(1 + \rho^2\right) \cdot B,$$

$$b = 2 \cdot k \cdot \frac{G_P}{G_{split}} \cdot B. \qquad\qquad \text{Eqs. 15}$$

In order to determine the temperatures of the coupler and splitter ($T_{coup}$ and $T_{split}$), two general classes of approaches can be pursued. First, a temperature measurement device monitors continuously the absolute temperatures of both components with a small absolute error (e.g. below 0.01°K). Or second, a temperature measurement device with an identically small repeatability error (e.g. below 0.01°K) is being used and pre-calibrated on a known charge. Since temperature measurement devices normally have a smaller repeatability error than absolute measurement error, an approach within the second class of solutions is proposed in the following:

First of all, eqs. 14 are rewritten as follows:

$$P_{coup} = a \cdot T_{coup},$$

$$P_{split} = b \cdot \left( T_{coup} + \Delta T \right), \qquad\qquad \text{Eq. 16}$$

where the following definition has been used:

$$T_{split} = \left( T_{coup} + \Delta T \right). \qquad\qquad \text{Eq. 17}$$

A problem lies in the fact that measurement devices having, for example, a repeatability error below 0.01°K do not automatically yield measurements with absolute error below 0.01°K. A calibration process is therefore necessary. Formally, the sensors measure temperatures $T^s_{split}$ and $T^s_{coup}$ which are just estimates of the real temperatures of the components, $T_{split}$ and $T_{coup}$, with absolute errors larger than 0.01°K but with repeatability errors (i.e. fluctuation between successive measurements at constant temperature) smaller than 0.01 K.

The proposed approach simply calibrates the temperature measurements for $T^s_{split}$ with respect to the temperature measurements for $T^s_{coup}$. For this, both devices have to be installed so that they measure the same temperature of a reference object at unknown temperature. Thereafter, the temperature of this reference object will be varied (still without knowing the actual physical temperature of that object) while the measurements get recorded. This results in the following calibration curve:

$$T^s_{coup} = f \left( T^s_{split} \right). \qquad\qquad \text{Eq. 18}$$

From eqs. 17 and 18, the following equation can be obtained. It describes the case when the two devices do not measure the same temperature anymore:

$$\Delta T = f \left( T^s_{split} \right) - T^s_{coup}. \qquad\qquad \text{Eq. 19}$$

It can be noticed that while $T^s_{split}$ and $T^s_{coup}$ are not calibrated absolute temperature measurements, the difference $\Delta T$ is a calibrated temperature difference. I.e. the absolute error on $\Delta T$ is below 0.01°K if the repeatability error of the individual temperature sensors was that low.

Therefore, eqs. 14 can be rewritten:

$$P_{coup} = a \cdot T_{coup},$$

$$P_{split} = b \cdot \left(T_{coup} + \Delta T\right) \qquad \text{Eqs. 20}$$

As said, in contrast to $T_{coup}$, $\Delta T$ can be determined with an absolute error below 0.01°K by applying the calibration of eq. 19. As a result, eqs. 20 remain just dependent on the temperature of the coupler, $T_{coup}$. This procedure can obviously be extended to any number of temperatures, for example, a third temperature which quantizes the noise power of the antenna could be included etc.

Finally, the calibration which relates the noise powers, $P_{coup}$ and $P_{split}$, to the measured temperature of the coupler, $T^s_{coup}$, has to be performed. For this, one noise diode with given noise power, $P_{diode}$ or a short-circuit can replace the antenna. The calibration is performed in analogy to the calibration phases described before. Thus, only the temperature of the coupler, $T_{coup}$, remains to be calibrated, resulting in the following calibration function:

$$P_{coup} + P_{split} = g\left(T^s_{coup}\right) + b \cdot \Delta T,$$

or

$$g\left(T^s_{coup}\right) = P_{coup} + P_{split} - b \cdot \Delta T, \qquad \text{Eqs. 21}$$

where the right-hand side of the second equation represents the reference noise powers known from the generated noise power of the diode $P_{diode}$. Therefore, we obtain a second calibration function f, which relates the measured temperatures, $T^s_{coup}$, of the coupler to an equivalent noise power.

In order to apply the calibrations g and f in an actual measurement, the following three steps have to be performed:

1. The non-calibrated temperature of the coupler, $T^s_{coup}$, gets measured. A lookup table defined by eqs. 21 can then be used in order to relate the measured temperature to the noise power:

$$P_1 = g\left(T^s_{coup}\right) = P_{coup} + P_{split} - b \cdot \Delta T.$$

2. The temperature of the splitter, $T^s_{split}$, gets measured, from which a lookup table can be used for the calibration function f:

$$P_2 = b \cdot f\left(T^s_{split}\right) = b \cdot \Delta T.$$

3. The noise power to be determined is therefore given by:

$$P_{coup} + P_{split} = P_1 + P_2.$$

**Further Embodiments**

**Multi-frequency extension of the multichannel radiometer**

The dielectric properties of tissues and the antenna characteristics are frequency dependent (as mentioned in eq. 5), which means that multiple frequency responses of the same media under test will allow us to retrieve a temperature depth profile [6]. To this end, the mono-frequency architecture proposed in fig. 5 can be extended to a multi-frequency architecture with $n$ frequency bands.

Fig. 7 shows such an extension to $n=6$ frequency bands. This further embodiment of the present invention proposes to divide each of the outputs **71s** and **71d** of the 180° hybrid coupler into the 6 desired frequency bands. As sketched on fig. 7, the auto-calibration process **15** is again made of a dual-directional coupler **50** connected to noise diodes **51** and **52.** The correlator is a 180° hybrid coupler **56** and the multifrequency architecture is implemented thanks to 6-ways power dividers **72-1 and 72-2** for example. Twelve detectors **58** and twelve band-pass filters **57** have then to be used in order to set the frequency bandwidth of each pair of corresponding channels. The power budget analysis applied to each of the 12 channels leads to eqs.8 to 13 which are exploited successively for each of the 6 frequency sub-bands. Of course another number of channels than 6 can be implemented in the same way.

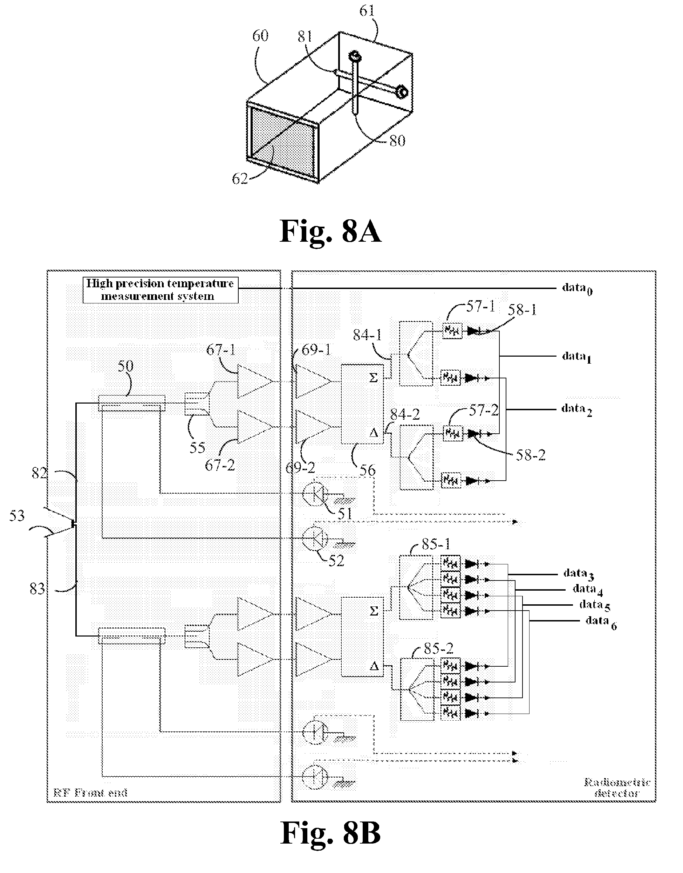

An alternative of this extension is achievable when each antenna is equipped with two feeding systems. This particular architecture allows relaxing constraints on the antenna frequency bandwidth if both probes are separately optimized for their dedicated frequency sub-bands. An example of such an antenna with two feeding systems is presented fig. 8A: it is an extension of the simple waveguide antenna filled with a dielectric and fed by a single coaxial probe (fig. 6A) when two coaxial probes **80** and **81** are located on two perpendicular metallic walls of the constituting waveguide.

Fig. 8B presents the resulting radiometer architecture for such a multichannel architecture in the case of $n=6$ frequency bands and when the first probe of the antenna is dedicated to 2 frequency bands via the connection **82** (first multi-channel radiometer chain) and the second probe to 4 other frequency bands via the connection **83** (second multi-channel radiometer chain). Two two-way power dividers **84-1** and **84-2**, respectively two four-way power dividers **85-1** and **85-2,** are connected to each output of the 180° hybrid coupler of the first multi-channel radiometer chain, respectively of the second multi-channel radiometer chain.

**IF extension of the multichannel radiometer**

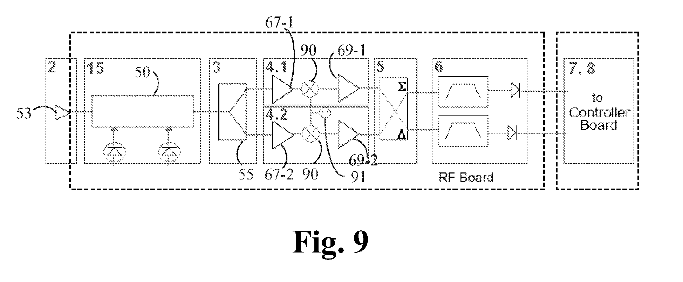

When the radiometric chain, object of the present invention, is implemented at higher frequency, a frequency conversion might be needed. As plotted in fig. 9, this frequency conversion could be performed by a signal from a local oscillator **91** and by a frequency converter **90**. The rest of the radiometric chain is kept unchanged.

**Flexible measurement cycle extension**

In a more flexible implementation of the described invention, the three phase measurement cycle can be changed and adjusted by software. This allows varying independently the individual integration times of the three measurement cycles (scene, noise source 1, and noise source 2), and changing the sequence of cycles itself. As a result, the three phase measurement cycle can be optimized for maximal system performance. In fig. 4B, such an alternative measurement cycle is depicted.

**Preferred embodiment**

A preferred embodiment of the invention includes a radiometric system whose purpose is to collect thermal noise emitted from an object under investigation thanks to one or several receiving antenna(s). This collection of thermal noise is enabled thanks to two or more independent amplification chains, each containing one or several low noise amplifiers, and eventually one or several power splitter(s) if the number of amplification chains is larger than the number of antennas. Outputs of these amplification chains are then correlated. The resulting outputs, named sum ($\Sigma$) and difference ($\Delta$), are finally detected and integrated over the desired frequency band.

**References**

[1]

S. Vesnin "System for identifying thermal variations in breast tissue" Patent WO2004/080298.

[2]

R. H. Dicke "The Measurement of Thermal Radiation at Microwave Frequencies" Review of Scientific Instruments, Vol.17, No. 7(1946), pp. 268-275.

[3]

D. F. Ammar "Multi-channel radiometer imaging system" US Patent US2006/0164064.

[4]

A.R. Kerr "On the Noise Properties of Balanced Amplifiers" IEEE Microwave and Guided Wave Letters, Vol. 8, No. 11(1998), pp. 390-392.

[5]

J. P. Pascual, B. Aja, M. L. de la Fuente, T. Pomposo, E. Artal "System Simulation of a Differential Radiometer Using Standard RF-Microwave Simulators" SIMULATION, Vol. 81, No. 11(2005), pp. 735-755.

[6]

T. Sugiura, Y. Kouno, A.Hashizume, H. Hirata, J.W Hand, Y. Okita, S. Mizushina "Five-Band Microwave Radiometer System for Non-Invasive Measurement of Brain Temperature in New-Born Infants: System Calibration and its Feasibility" EMBC 2004 Conference Proceedings. 26th Annual International Conference of the Engineering in Medicine and Biology Society, Vol. 1, pp. 2292-2295.

**Claims**

1. A radiometric system, comprising
means for collecting thermal noise emitted from the investigated object, i.e., one or several receiving antenna (**2**),
two or more independent amplification chains (**4.1-4.n**), each containing one or several low noise amplifiers (**67-1** and **67-2**),
optionally one or several power splitter(s) (3) if the number of amplification chains is larger than the number of antennas,
means (**5**) for correlating outputs of amplification chains,
means for the detection (**6**) and integration (**7**) of this signal,
and which allows removing the noise power created by the electronic circuitry from the measured noise power, leaving just the desired noise power from the investigated object for quantification.

2. A system as claimed in claim 1, with a single-antenna (**2**) and a mono-frequency architecture, including at least one of the following features:

   a) an auto-calibration process (**15**) performed comprising:

      two high ENR noise diodes (diode1 -(**51**) and diode2 -(**52**)),
      a four-port dual-directional coupler (**50**),
      a high precision temperature sensor (**16**),
      a 3-phase measurement cycle depending on the on- or off-state of the two noise diodes, where
      the first phase (phase1) is dedicated to the measurement of the amplyfied noise from the scene, when both noise diodes are off-state,
      the second phase (phase2) is dedicated to the measurement of the noise from diode1 (**51**), when diode1 (**51**) become on-state and diode2 (**52**) remains off-state,
      the third phase (phase3) is dedicated from the measurement of the noise from diode2 (**52**), when diode1 (**51**) turns off-state and diode2 (**52**) on-state,

   b) two amplification channels (**4.1** and **4.2**), each made of a RF very low-consumption and low noise amplifier (**67-1** and **67-2**) preceded by a high gain RF amplifier (**69-1** and **69-2**, connected to the antenna through a 2-way power divider (**55**),

c) a correlator (**5**) made of a 180° hybrid coupler (**56**) used as a combiner, i.e., the outputs of this hybrid coupler (**56**) are the sum and difference of the two input channels, and

d) where the calibrated brightness temperature ($T_B$) of the observed body can be deduced from the measured noise power by means of the following formulae (corresponding to the power budget analysis of the radiometric chain):

$$T_B = \frac{\Delta P_{scene} - 2P_{coup} + P_{split}}{2kBG_T},$$

where

$$P_{coup} = 2kT_{coup}G_P(1+\rho^2)\cdot B, \quad G_T = G_P(1-\rho^2) \quad \text{and} \quad P_{split} = 2kT_{split}\frac{G_P}{G_{split}}\cdot B,$$

with

$$\rho = \sqrt{\frac{\Delta P_{diode2}}{2P_{diode2}CG_P}},$$

$$G_P = \frac{\Delta P_{diode1}}{2P_{diode1}C}.$$

$G_T$: transducer gain of the radiometric chain,

$k$: Boltzmann constant,

$B$: frequency bandwidth,

$P_{coup}$: noise power produced by the dual-directional coupler (**50**) and the off-state,

$P_{split}$: noise power produced by the power splitter (**55**),

$T_{coup}$: temperature of the dual-directional coupler (**50**), which gets determined in real-time by the high precision temperature sensor located in the antenna box,

$T_{split}$: temperature of the power splitter (**55**), which gets determined in real-time by the high precision temperature sensor located in the antenna box,

$G_P$: amplification gain of the radiometric chain,

$\rho$: antenna efficiency coefficient,

$G_{split}$: power gain of the splitter (**55**) (determined by pre-characterization),

$P_{diode1}$: the noise power produced by the diode1 (**51**) in on-state (determined by pre-characterization),

$C$: coupling coefficient of the dual-directional coupler (**50**) (determined by pre-characterization),

$P_{diode2}$: the noise power produced by the diode2 (**52**) in on-state (determined by pre-characterization),

$\Delta P_{scene}$: the measured power when both diodes are in off state (phase 1 of measurement cycle),

$\Delta P_{diode1}$: the measured power when diode1 (**51**) is in on-state and diode2 (**52**) in off-state (phase 2 of measurement cycle),

$\Delta P_{diode2}$: the measured power when diode2 (**52**) is in on-state and diode1 (**51**) in off-state (phase 3 of measurement cycle),

e) where the temperatures of a few passive RF components (such as coupler (**50**) or power splitter (**55**)) are measured by temperature sensors (**16**) located in the antenna box and converted into the corresponding noise powers generated in those RF components, in order to account for them in the noise power budget analysis for the calibration process,

f) and where the coupling coefficient of the coupler (**50**), C, the power gain of the power splitter (**55**), $G_{split}$, the emitted noise power of the first diode (**51**), $P_{diode1}$, and the emitted noise power of the second diode (**52**), $P_{diode2}$, are being determined in a pre-measurment characterization phase.

3. A system according to any one of the preceding claims, with a single-antenna and a multi-frequency architecture, further including at least one of the following features:

   g) two n-ways power dividers (**72-1** and **72-2**) connected at each of the output of the 180° hybrid coupler (**56**) in order to divide each output of the correlation system into the n desired frequency bands, and
   h) where the calibrated brightness temperature $(T_B)$ of the observed body can be deduced from the measured noise power for each frequency by means of the previously enonced formulae.

4. A system according to any one of the preceding claims, with a dual-probe single-antenna and a multi-frequency architecture, **characterized in that** at least one antenna is made of a single radiating element fed by multiple independent feeding systems, wherein each probe is devoted for receiving the noise signal from the scene into specific frequency sub-band(s).

5. A system according to any one of the preceding claims, where a calibration process (**15**), made of one or more reference measurements, is introduced on the radiometric chain in order to perform calibration of the noise power emitted from the device under observation.

6. A system according to any one of the preceding claims, where the radiometer measures simultaneously through parallel channels or consecutively through a switching cycle the calibrated temperatures at n different frequency bands.

7. A system according to any one of the preceding claims, where the n parallel frequency channels are implementation by means of the addition, after the correlator (**5**), of a means for splitting the signal into n different sub-channels one band-pass filter (**57**) and detector (**58**) for each of the n frequency sub-bands, and where all RF components and antenna(s) cover all sub-bands.

8. A system according to any one of the preceding claims, where the calibrated brightness temperature $(T_B)$ of the observed body can be deduced from the measured noise power by deduction from the power budget analysis of the radiometric chain.

9. A system according to any of the preceding claims, where the conversion from the measured temperatures of some RF components (such as coupler (**50**) or power splitter (**55**)), into the corresponding noise powers is made thanks to a lookup table which is created during a pre-calibration phase of the radiometric chains where the antenna is replaced by a known charge, such as a noise diode or a short circuit.

10. A system according to any one of the preceding claims, where radiating element(s) could be any type of antennas, such as waveguide antenna(s) (single fed or with muliple feeding systems), printed antenna(s) (spiral antennas, fractal antennas, slot antennas, etc.), etc.

11. A system according to any one of the preceding claims, where the antenna is a waveguide antenna with two coaxial probes, and where each probe is optimized for some of the frequency bands of the multi-frequency radiometer.

12. A system according to any one of the preceding claims, where a frequency conversion is performed thanks to a local oscillator (**91**) in order, for example, to implement the radiometric chain at higher frequencies.

13. A system according to any one of the preceding claims, wherein the system is an auto-calibrating Multi-channel Radiometer comprising several antennas (**2**) sensing the thermal radiation from an object (**1**), wherein before the sensed power is getting fed into n different amplification channels (**4.1-4.n**), the power is splitted by a power splitter (**3**) and after the amplification channels, the signal gets recombined by a correlator (**5**) before getting detected by a square law detector (**6**) and an integrator (**7**), and wherein an analogue-to-digital converter (**8**) makes the measurement readable by a personal computer, and further including two noise sources (**10, 11**) connected through cables (**13, 14**) to a four port dual-directional coupler (**50**) and at least one high precision temperature sensor (**16**) connected through a cable (**12**) to a second channel of the analogue-to-digital converter (**8**) which allows to monitor continuously the physical temperature of the radiometer, and wherein a measurement cycle is driven by the personal computer through further digital connections (**17, 18**).

Fig. 1

Fig. 2

Fig. 3A

Fig. 3B

Fig. 3C

Fig. 3D
(PRIOR ART)

## Fig. 4A

## Fig. 4B

Fig. 5

Fig. 6A

**Fig. 6B**

**Fig. 7**

**Fig. 8A**

**Fig. 8B**

**Fig. 9**

**EP 1 923 679 A1**

European Patent Office

**EUROPEAN SEARCH REPORT**

Application Number

EP 06 12 4247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TUOVINEN J ET AL: "Planck mission with advanced cryogenic mm- and submm-wave receiver arrays" AEROSPACE CONFERENCE, 2004. PROCEEDINGS. 2004 IEEE BIG SKY, MT, USA 6-13 MARCH 2004, PISCATAWAY, NJ, USA,IEEE, US, vol. 2, 6 March 2004 (2004-03-06), pages 741-746, XP010748027 ISBN: 0-7803-8155-6 * the whole document * | 1 | INV. G01K11/00 |
| X | US 3 544 900 A (BEYER JOHN P) 1 December 1970 (1970-12-01) * column 1, lines 25-51 * | 1 | |
| X | I CORBELLA ET AL: "On-Board Accurate Calibration of Dual-Channel Radiometers Using Internal and External References" IEEE TRANSACTIONS ON MICROWAVE THEORY AND TECHNIQUES, vol. 50, no. 7, July 2002 (2002-07), pages 1816-1820, XP002430092 * the whole document * | 1,2,5 | |
| X | US 4 081 679 A (COHN) 28 March 1978 (1978-03-28) * abstract; figures 1,2 * * columns 1,2,7,8 * | 1 | TECHNICAL FIELDS SEARCHED (IPC) G01K |
| X | US 4 724 439 A (WILEY ET AL) 9 February 1988 (1988-02-09) * figure 3 * * columns 1,5,6,8 * | 1,2 | |
| X | EP 0 335 942 B1 (HUGHES AIRCRAFT CO) 7 September 1994 (1994-09-07) * columns 1-4,8,14; figures 1A,1B * | 1,7 | |

-/--

The present search report has been drawn up for all claims

| Place of search | Date of completion of the search | Examiner |
|---|---|---|
| The Hague | 19 April 2007 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 12 4247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 56 108947 A (MITSUBISHI ELECTRIC CORP) 28 August 1981 (1981-08-28) * abstract; figure 1 * ----- | 13 | |

TECHNICAL FIELDS
SEARCHED     (IPC)

The present search report has been drawn up for all claims

| Place of search | Date of completion of the search | Examiner |
|---|---|---|
| The Hague | 19 April 2007 | Barthélemy, Matthieu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 06 12 4247

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2007

| Patent document cited in search report | | Publication date | Patent family member(s) | | Publication date |
|---|---|---|---|---|---|
| US 3544900 | A | 01-12-1970 | NONE | | |
| US 4081679 | A | 28-03-1978 | NONE | | |
| US 4724439 | A | 09-02-1988 | NONE | | |
| EP 0335942 | B1 | 07-09-1994 | CA | 1287109 C | 30-07-1991 |
| | | | DE | 3851430 D1 | 13-10-1994 |
| | | | DE | 3851430 T2 | 19-01-1995 |
| | | | EP | 0335942 A1 | 11-10-1989 |
| | | | JP | 6056396 B | 27-07-1994 |
| | | | JP | 2501236 T | 26-04-1990 |
| | | | US | 4864309 A | 05-09-1989 |
| | | | WO | 8901710 A1 | 23-02-1989 |
| JP 56108947 | A | 28-08-1981 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004080298 A

- US 20060164064 A

### Non-patent literature cited in the description

- **R. H. DICKE.** The Measurement of Thermal Radiation at Microwave Frequencies. *Review of Scientific Instruments,* 1946, vol. 17 (7), 268-275
- **A.R. KERR.** On the Noise Properties of Balanced Amplifiers. *IEEE Microwave and Guided Wave Letter,* 1998, vol. 8 (11), 390-392
- **J. P. PASCUAL ; B. AJA ; M. L. DE LA FUENTE ; T. POMPOSO ; E. ARTAL.** System Simulation of a Differential Radiometer Using Standard RF-Microwave Simulators. *SIMULATION,* 2005, vol. 81 (11), 735-755

- **T. SUGIURA ; Y. KOUNO ; A.HASHIZUME ; H. HIRATA ; J.W HAND ; Y. OKITA ; S. MIZUSHINA.** Five-Band Microwave Radiometer System for Non-Invasive Measurement of Brain Temperature in New-Born Infants: System Calibration and its Feasibility. *EMBC 2004 Conference Proceedings. 26th Annual International Conference of the Engineering in Medicine and Biology Society,* vol. 1, 2292-2295